# EUROPÄISCHE PATENTSCHRIFT

(11) **EP 0 587 608 B1**
(45) Veröffentlichungstag und Bekanntmachung des Hinweises auf die Patenterteilung: **11.09.1996**
(21) Anmeldenummer: 92910586.4
(22) Anmeldetag: 27.05.1992
(51) Int. Cl.: G21C 3/352, G21C 3/322

(54) **BRENNELEMENT MIT EINER GITTERSTRUKTUR ZWISCHEN DEN STÄBEN**
FUEL ELEMENT WITH A GRID STRUCTURE BETWEEN THE RODS
ELEMENT COMBUSTIBLE A STRUCTURE RETICULAIRE ENTRE LES CRAYONS

(30) Priorität: 03.06.1991 DE 4118124
(43) Veröffentlichungstag der Anmeldung: 23.03.1994
(73) Patentinhaber: SIEMENS AKTIENGESELLSCHAFT, 80333 München (DE)
(72) Erfinder: SUCHY, Peter, D-8520 Erlangen (DE); BRUCH, Günter, D-8520 Erlangen (DE); STEINKE, Alexander, D-8553 Ebermannstadt (DE); BÖKERS, Franz-Josef, D-8510 Fürth (DE)
(86) Internationale Anmeldenummer: DE9200433
(87) Internationale Veröffentlichungsnummer: WO9222071

(56) Entgegenhaltungen:
- EP-A- 0 261 544
- EP-A- 0 349 408
- FR-A- 2 578 348
- US-A- 3 928 131

## Beschreibung

Die Erfindung betrifft eine Gitterstruktur für ein langgestrecktes Brennelement mit nebeneinander parallel zueinander angeordneten Stäben, zwischen denen ein Kühlmittelstrom längs durch das Brennelement geleitet wird. Die Erfindung betrifft ferner ein derartiges Brennelement mit einem Abstandhalter und/oder einem Mischgitter, die eine derartige Gitterstruktur aufweisen.

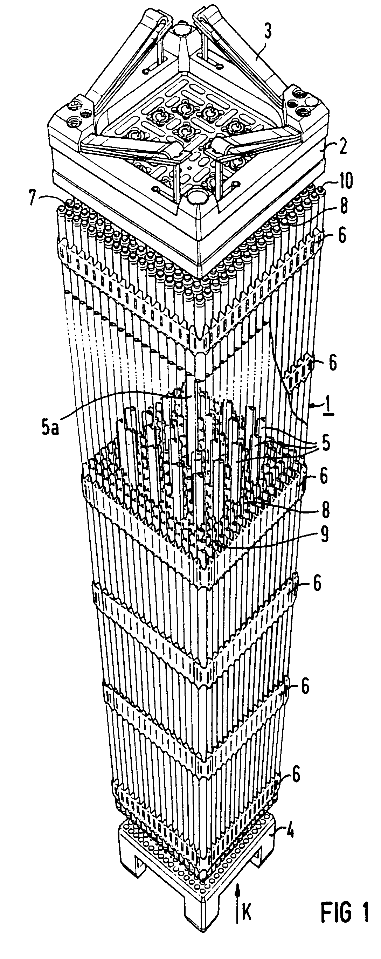

In Fig. 1 ist ein derartiges Brennelement für einen Druckwasserreaktor dargestellt, wie es z.B. in der europäischen Patentanmeldung EP-A-0 364 623 beschrieben ist. Dieses Brennelement 1 enthält z.B. 17 x 17 Stäbe, einen Brennelementkopf 2 mit Niederhaltefedern 3 und einen Brennelementfuß 4. Eine Anzahl n (z.B. n = 24) der Stäbe sind Führungsrohre, während der Stab 5a ein Instrumentierungsrohr ist und die restlichen Stäbe 7, 8, 9 und 10 mit Brennstoff in Form zylindrischer Pellets gefüllt sind. Diese Stäbe sitzen üblicherweise in einer im Querschnitt quadratischen Gitteranordnung, während im Reaktorkern in der Regel eine vorgegebene Anzahl untereinander gleicher Brennelemente vorgesehen ist. Diese sind in einem Reaktordruckbehälter angeordnet und werden jeweils in Richtung des eingezeichneten Pfeiles von unten nach oben von einem Kühlmittel K durchströmt.

Die Stäbe werden dabei in einer Tragstruktur gehalten, die aus dem Brennelementkopf 2 mit den Niederhaltefedern 3, dem Brennelementfuß 4, den dazwischen liegenden Führungsrohren 5 für nicht gezeigte Steuerstäbe sowie, abhängig vom Brennelementtyp, dem zentralen Instrumentierungsrohr 5a besteht. An den Führungsrohren 5 sind gitterförmige Abstandhalter 6 angeordnet, die einen quadratischen Querschnitt mit quadratischen, flächengleichen Maschen ausweisen. Jeder der Stäbe ist durch eine Masche des Gitters geführt, so daß die Stäbe zu einem Bündel zusamengefaßt und derart gehalten sind, daß sie sich axial frei ausdehnen können, während ihre seitliche Position in den Maschen durch entsprechende Abstandhaltemittel, z.B. Federn und Noppen an den Stegen des Abstandhalters, fixiert ist. Die seitlich offene Konstruktion des Brennelementes ermöglicht eine Quervermischung des Kühlmittels K, die dessen Aufwärmung vergleichmäßigt.

Bei einem Siedewasserreaktor ist diese Quervermischung durch einen die Stäbe seitlich umgebenden Kasten unterbunden, der sich vom Fußteil bis zum Kopfteil erstreckt. Steuerstäbe oder andere, steuerbare Absorberelemente sind außerhalb des Kastens angeordnet, während das Kühlmittel K durch entsprechende Öffnungen des Fußes in flüssiger Form eintritt und als Flüssigkeit-Dampfgemisch die Durchtrittsöffnungen im Kopf 2 durchströmt. Dabei kann vorgesehen sein, einen oder mehrere Stäbe durch ein Wasserrohr zu ersetzen, das von flüssigem Kühlmittel durchströmt wird und unter Umständen den Querschnitt mehrerer Maschen des Abstandhalters einnehmen kann.

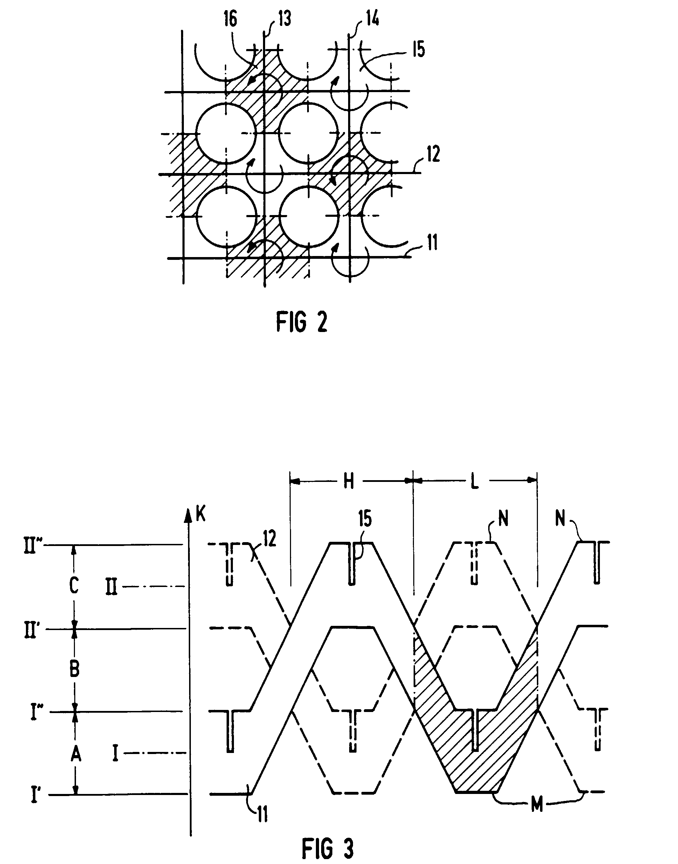

Um eine gleichmäßige Temperaturbelastung und eine hohe Ausnutzung des Brennstoffs bei optimaler Kühlung zu erreichen, ist sowohl in radialer wie in axialer Richtung eine möglichst gleichmäßige Temperatur an den Brennstäben anzustreben. Beim Betrieb des Reaktors entwickeln aber unterschiedliche Teile unterschiedlicher Brennstäbe unterschiedliche Temperaturen, so daß es sowohl in axialer Richtung wie in radialer Richtung im Brennelement zu Temperaturspitzen kommt. Deshalb ist bereits in der DE-OS 15 64 697 vorgeschlagen, Abstandhalter mit Mischflügeln zu verwenden, die bei Druckwasserreaktoren eine gleichmäßige radiale Temperaturverteilung erzeugen sollen, indem sie eine Querströmung durch das einzelne Brennelement und über die Stoßflächen der Brennelemente hinweg anregen. In Figur 2 ist die Gitterstruktur eines derartigen Abstandhalters schematisch dargestellt. Dabei sitzen die Brennstäbe jeweils in Maschen eines Gitters, die von Längsstegen 11, 12 und Querstegen 13, 14 gebildet werden, die die Längsstege bei einem Brennelement mit quadratischem Querschnitt im rechten Winkel kreuzen. Diese Stege erstrecken sich in einer senkrecht zu den Brennstäben stehenden Kreuzungsebene, während ihre Seitenflächen parallel zu den Stäben ausgerichtet sind.

Dadurch entstehen Strömungsunterkanäle 15, 16, die jeweils von vier Stäben umgeben sind. In Fig. 2 sind diese Strömungsunterkanäle abwechselnd schraffiert und unschraffiert dargestellt, so daß sich ein schachbrettartiges Muster aus schraffierten ("schwarzen") und unschraffierten ("weißen") Kanälen ergibt. In dem weißen Kanal, der von den Stäben umgeben ist, kann z.B. der Längssteg 12 zu beiden Seiten des kreuzenden Quersteges 13 zwei seitliche (nicht dargestellte) Laschen an seiner dem Kühlmittelstrom abgewandten Kante tragen, die in entgegengesetzter Richtung seitlich in den Kühlmittelstrom derart hineingebogen sind, daß im "weißen" Kanal 15 der mit einem Pfeil symbolisch dargestellte Drall entsteht. In den schwarzen Kanälen tragen die Querstege 13, 14 ebenfalls jeweils zu beiden Seiten des kreuzenden Längssteges seitliche Laschen, die als Mischflügel ausgebildet sind und entgegengesetzt zueinander schräg in den Kühlmittelstrom hineinragen, wobei aber der in Figur 2 angegebene Pfeil zeigt, daß dort die Ausrichtung des erzeugten Dralls entgegengesetzt zur Ausrichtung des Dralls in den weißen Kanälen ist.

Dadurch entstehen Querströmungen, die jeweils diagonal durch die Maschen des Gitters führen und sich in den Strömungsunterkanälen unter Ausbildung einer Drehströmung kreuzen.

Es ist auch schon vorgeschlagen worden, selbst in Ebenen des Druckwasserreaktors, die an sich aus Gründen der Stabilität keinen Abstandhalter erfordern, derartige Gitterstrukturen mit Mischflügeln anzuordnen, um die seitliche Durchmischung des Kühlmittels zu verstärken und einen radialen Temperaturausgleich zu ermöglichen. In diesem Fall enthalten die Stege, die bei Abstandhaltern Halteelemente (z.B. in Form von Noppen und Federn) zur Fixierung der seitlichen Position der Brennstäbe ausweisen, höchstens noch Sicherheitsanschläge, um zu verhindern, daß die Stäbe bei einer Vibration an den Mischflügeln aufschlagen und diese beschädigen.

Derartige Mischflügel sind auch schon bei Siedewasserreaktoren vorgeschlagen worden, obwohl wegen der Brennelement-Kästen und deren Wände dort eine mehrere Brennelemente übergreifende Durchmischung nicht möglich ist. In diesem Fall führt aber der in den Strömungsunterkanälen erzeugte Drall zu Wirbeln in der Axialströmung, die vor allem im oberen Teil des Brennelements, wo das Kühlmittel als Flüssigkeit/Dampf-Gemisch vorliegt, zu einer Benetzung der Brennstäbe mit den im Gemisch enthaltenen Flüssigkeitströpfchen führt. Dadurch wird das Auftreten von Heißstellen gemindert, die vor allem bei hohen Leistungen zu einem Austrocknen des an den Brennstäben entlangströmenden Flüssigkeitsfilms und zu einer Verschlechterung des Wärmeübergangs ("dry out") führen könnten.

Dabei ist es oft erforderlich, daß an allen Brennelementen eines Reaktorkerns jeweils der gleiche Strömungswiderstand für das durchströmende Kühlmittel auftritt, da Unterschiede im Strömungswiderstand auch entsprechende Unterschiede in der Strömungsverteilung und Kühlwirkung an den einzelnen Brennelementen hervorrufen.

Wird also z.B. nach einem Betriebszyklus ein Teil der alten Brennelemente ersetzt durch Brennelemente mit entsprechenden Einbauten zur Verbesserung der Temperaturverteilung, so wird gegenüber den benachbarten Brennelementen der Strömungswiderstand gerade wegen der eingesetzten Gitterstrukturen verschlechtert und damit der Kühlmitteldurchsatz in den "verbesserten" Brennelementen herabgesetzt. Dadurch wird oft der angestrebte Erfolg kompensiert oder überkompensiert.

Dieser störende Druckverlust entsteht einerseits an der Verengung des Strömungsquerschnittes und der anschließenden Erweiterung auf die ursprüngliche Größe, die durch die Stege und ihre Kreuzungsstellen sowie die daran angeordneten Abstandhalteelemente und Mischflügel bedingt sind (Kompression und Expansion). Andererseits bedeuten auch die von den Mischflügeln erzeugten Wirbeln und Turbulenzen weitere Druckverluste.

Daher ist schon vorgeschlagen worden, diesen Druckverlust dadurch zu kompensieren, daß der Brennstabdurchmesser z.B. von 9,5 mm auf 9,14 mm reduziert wird. Für die Brennstab-Herstellung bedeutet dies, daß für diesen neuen Brennstabtyp Maschinen, Werkzeuge und Lagerraum zusätzlich bereitgestellt werden müssen. Durch die Verkleinerung des Brennstab-Durchmessers wird aber auch der Brennstoffgehalt und der mögliche Abbrand in den Brennelementen verringert.

Es kann aber auch von vornherein angestrebt werden, den vorgesehenen Brennstoffgehalt auf möglichst dünne Brennstäbe zu verteilen, deren Anzahl dann entsprechend größer zu wählen ist. Hier wächst aber der Strömungswiderstand mit der Anzahl der Brennstäbe und erfordert eine strömungsgünstige Konstruktion der Brennelement-Einbauten.

Aus der EP-A-0 349 408, die den Oberbegriff des Anspruchs 8 bildet, ist ein Abstandhalter bekannt, bei dem die Maschen aus einem Satz zueinander paralleler (z. B. in "Ost-West-Richtung" verlaufender) Stege sich mit einem entsprechenden, dazu senkrechten (z. B. nach "Nord-Süd" ausgerichteten) Satz von Stegen gebildet sind, die sich nicht durchsetzen, sondern übereinander angeordnet sind. Jeder Steg eines Satzes ist dabei gegenüber den anderen Stegen des gleichen Satzes seitlich und auch noch axial versetzt, so daß eine Vielzahl von übereinanderliegenden Ebenen entsteht, auf die die Kreuzungsstellen des Gitters und dort angeordnete Mischflügel verteilt sind. Dabei liegen viele Mischflügel unmittelbar neben Stegen, die sich in der gleichen Ebene befinden und in die Richtung erstrecken, in die auch die Mischflügel weisen. Diese Stege verhindern daher einen Drall, der um die Mittelachse des jeweiligen Strömungskanals gerichtet wäre und eine besonders wirksame Durchmischung bewirken würde. Das Gitter besitzt außerdem eine erhebliche axiale Baulänge und es entstehen Maschen, deren vier Seitenflächen, an denen die Brennstäbe abgestützt oder wenigstens in einem Sicherheitsabstand voneinander gehalten werden könnten, auf vier unterschiedlichen Niveaus liegen und daher diese Funktion nur unvollkommen erfüllen.

In der US-A-3,928,131 ist ein Abstandhalter mit Längsstegen und mit Querstegen beschrieben, die die Längsstege etwa senkrecht kreuzen. Die Kreuzungsstellen liegen alle in einer

Ebene und die Längs- und Querstege sind an diesen Kreuzungsstellen alle gleich breit. Die Stege tragen dabei etwa in der Mitte zwischen zwei Kreuzungsstellen und auf einem Niveau, das etwa in der Mitte zwischen dem oberen und unteren Rand der Kreuzungsstellen liegt, Noppen zum Abstützen der Brennstäbe. Um die Elastizität dieser Gitterstruktur zu erhöhen, sind die Querstege und Längsstege in der Nähe der Noppen wesentlich verschmälert, wodurch sich zickzackförmige Ränder ergeben, bei denen die Periode des zickzackförmigen Verlaufs dem Abstand zwischen den Mittelachsen benachbarter Brennstäbe entspricht, also der Breite eines Strömungsunterkanals.

Die FR-A-2578348 zeigt Abstandhalter, bei denen die Oberkanten von sich etwa senkrecht kreuzenden Stegen teilweise zickzackförmig mit einer der Halbperiode des Zickzacks entsprechenden Periode stets oberhalb und die entsprechenden Unterkanten stets unterhalb eines etwa der Mittelebene des Abstandhalters entsprechenden Niveaus verlaufen, auf dem auch die Kreuzungsstellen liegen.

Der Erfindung liegt die Aufgabe zugrunde, den Strömungswiderstand für das ein Brennelement durchströmende Kühlmittel möglichst gering zu halten.

Zur Lösung dieser Aufgabe setzt die Erfindung bei der Gitterstruktur der entsprechenden Mischgitter und/oder Abstandhalter an. Der Strömungswiderstand ist dort vor allem deswegen so groß, weil die Stege sich als gerade Bänder in einer einzigen, zu den Brennstäben senkrechten Ebene erstrecken, also die Kompression und Dekompression in allen Strömungsunterkanälen jeweils in der gleichen Ebene stattfinden. Auch die Mischflügel aller Strömungsunterkanäle liegen in einer Ebene, so daß auch der durch den Drall hervorgerufene Druckverlust in einer einzigen Ebene auftritt.

Die Erfindung sieht daher zur Lösung der Aufgabe vor, die Kreuzungsstellen, an denen die Längsstege die Querstege kreu zen bzw. die Mischflügel in den Strömungsunterkanälen angeordnet sind, auf mindestens zwei Kreuzungsebenen zu verteilen, wie es in den unabhängigen Ansprüchen 1, 3 und 8 näher angegeben ist.

Dadurch entsteht die im Anspruch 3 angegebene Gitterstruktur für ein langgestrecktes Brennelement der eingangs beschriebenen Art, bei der die Brennstäbe durch die Maschen eines Gitters geführt werden können und das Gitter von Stegen gebildet wird, die sich zickzackförmig zwischen einer oberen Kreuzungsebene (vorzugsweise einer zu den Stäben senkrechten oberen Kreuzungsebene) und einer unteren Kreuzungsebene (vorzugsweise einer zu den Stäben senkrechten unteren Kreuzungsebene) erstrecken, deren Seitenflächen zwischen den Stäben verlaufen und die sich an zwischen den Brennstäben liegenden Kreuzungsstellen gegenseitig durchsetzen, wobei eine erste Gruppe von Kreuzungsstellen in der oberen Kreuzungsebene, eine zweite Gruppe von Kreuzungsstellen in der unteren Kreuzungsebene liegen. Diese Gitterstruktur ist bereits dann vorteilhaft, wenn eigene Mischflügel nicht für erforderlich gehalten werden, also z.B. bei jedem Abstandhalter, der Abstandhaltemittel (z.B. Federn und Noppen) enthält, um die Position der Stäbe seitlich zu fixieren. Zum Beispiel ist am unteren Rand der reaktiven Zone, also in Nähe der Brennelement-Fußteile, keine Durchmischung sondern nur eine Fixierung der Brennstäbe erforderlich. Dort ist also eine Gitterstruktur mit Abstandhaltemitteln aber ohne Mischflügel vorteilhaft.

Insbesondere kann eine derartige Gitterstruktur aber auch für die Mischflügel vorgesehen sein, die bei einem Mischgitter eines Brennelementes in den entsprechenden Kreuzungsstellen des Gitters liegen. Bei dieser Gitterstruktur können also ebenfalls die Brennstäbe durch Maschen eines Gitters geführt werden, wobei an Kreuzungsstellen des Gitters, die zwischen den Brennstäben liegen, Mischflügel angeordnet sind. Dabei weist jeweils eine Kreuzungsstelle einer ersten Gruppe von Kreuzungsstellen mindestens einen in einer oberen, zu den Stäben senkrechten Kreuzungsebene angeordneten Mischflügel auf, während jede Kreuzungsstelle einer zweiten Gruppe von Kreuzungsstellen mindestens einen Mischflügel in einer unteren, zu den Stäben senkrechten Kreuzungsebene ausweist. Die Erfindung ermöglicht dabei, die Mischflügel an den dem Kühlmittelstrom abgewandten Kanten der Gitterstege anzuordnen (Anspruch 8).

Bei diesen Ausführungsformen wird das Gitter bevorzugt von Stegen gebildet, deren Seitenflächen parallel zu den Stäben ausgerichtet sind und zickzackförmig nur zwischen zwei zu den Stäben senkrechten, in Strömungsrichtung hintereinander liegenden Ebenen verlaufen. Es können aber auch Stege verwendet werden, die in den einzelnen Strömungsunterkanälen geringfügig gegenüber den Stäben geneigt sind. Auch die hintereinander angeordneten Kreuzungsebenen können gegenüber den Stäben geneigt oder aus einzelnen, unterschiedlich geneigten Teilebenen zusammengesetzt sein.

Für das grundlegende Prinzip einer Gitterstruktur mit geringem Strömungswiderstand ist es nicht erforderlich, daß die Stege des Gitters sich in den Strömungskanälen kreuzen. So sind z.B. Gitterstrukturen bekannt, die aus miteinander verbundenen Hülsen bestehen, durch die die Stäbe des Brennelementes geführt und mittels Federn und Noppen gehalten sind. Liegen alle Hülsen mit ihren Verschweißungen und Abstandhaltemitteln in einer Ebene, so entsteht auch an diesen Elementen ein Strömungswiderstand, der erheblich verringert werden kann, wenn diese Elemente auf mehrere, hintereinander liegende Ebenen verteilt werden.

Allgemein sieht die Erfindung daher eine Gitterstruktur für ein langgestrecktes Brennelement mit nebeneinander und parallel zueinander angeordneten Stäben vor, deren Zwischenräume Strömungsunterkanäle für einen zu den Stäben ungefähr parallelen Kühlmittelstrom bilden, wobei die Stäbe durch die Maschen eines Gitters geführt werden können, das eine dem Kühlmittelstrom abgewandte Stirnkante, eine dem Kühlmittel zugewandte Stirnkante und ungefähr zum Kühlmittelstrom parallele Seitenflächen aufweist. Jede der beiden Stirnkanten erstreckt sich etwa zickzackförmig zwischen stromaufwärts gelegenen Extrempunkten und stromabwärts gelegenen Extrempunkten, wobei zumindest ein Teil der stromabwärts gelegenen Extrempunkte der dem Kühlmittelstrom zugewandten Stirnkante etwa gleich weit oder weiter stromabwärts liegen als mindestens ein Teil der stromaufwärts gelegenen Extrempunkte der dem Kühlmittelstrom abgewandten Stirnkante. Die Halbperiode des Zickzacks entspricht dabei dem Abstand benachparter Brennstab-Achsen, also der Breite eines Strömungsunterkanals (Anspruch 1).

Vorteilhafte Weiterbildungen dieser Erfindung sind in den Unteransprüchen gekennzeichnet. Anhand von 9 Figuren wird die Erfindung näher erläutert. Es zeigen:
FIG. 1 den bereits beschriebenen Aufbau eines Druckwasser-Brennelementes nach dem Stand der Technik,
FIG. 2 die bereits beschriebene schachbrettartige Aufteilung der Kreuzungsstellen bzw. Strömungsunterkanäle bei einem Abstandhalter oder Mischgitter,
FIG. 3 und 4 jeweils zwei in senkrechter Richtung zu den Brennstäben hintereinander liegende Längsstege und Querstege,
FIG. 5 eine Teil-Draufsicht auf einen Querschnitt durch das Brennelement mit Brennstäben und einem Abstandhalter, Längsstegen und Querstegen,
FIG. 6 eine entsprechende Teil-Draufsicht auf ein Mischgitter mit Mischflügeln,
FIG. 7 und 8 einen Längssteg und Quersteg mit Mischflügeln gemäß der Erfindung,
FIG. 9 eine Seitenansicht durch eine als Mischgitter dienende Gitterstruktur nach der Erfindung,
FIG. 10 eine perspektivische Seitenansicht gemäß FIG. 9 nach Einsetzen der Brennstäbe.

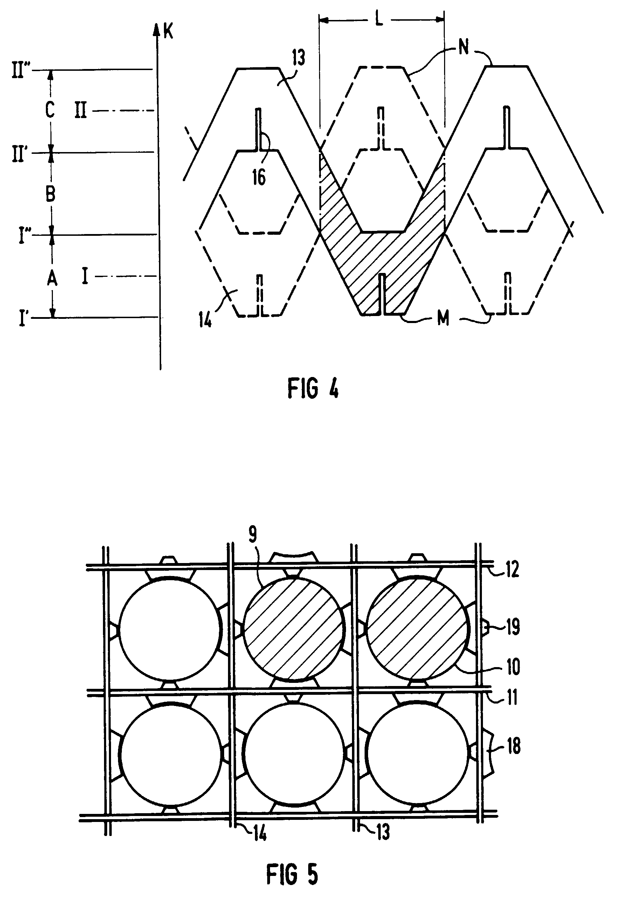

In Figur 2 ist bereits ein schachbrettartiges Muster für die Strömungsunterkanäle gezeichnet, in denen sich die Kreuzungsstellen der Stege und die Mischflügel befinden. Gemäß der Erfindung liegen nicht alle Kreuzungsstellen in einer axialen Querschnittsebene des Brennelementes, sondern es sind mindestens zwei derartige Kreuzungsebenen und mindestens zwei Gruppen von Kreuzungsstellen vorgesehen, wobei die Kreuzungsstellen der einen Gruppe in der einen, die Kreuzungsstellen der anderen Gruppe in der anderen Kreuzungsebene liegen. Das Schachbrettmuster der Figur 2 entsteht dabei dann, wenn bei zwei im Gitter nebeneinander liegenden Kreuzungsstellen jeweils die eine Kreuzungsstelle der einen Gruppe, die andere Kreuzungsstelle der anderen Gruppe angehört. In Figur 2 sind der Strömungsunterkanal 16 und die anderen Strömungsunterkanäle mit den der ersten Gruppe angehörenden Kreuzungsstellen durch die Schraffur hervorgehoben und in den Figuren 3 und 4 ist mit durchgezogenen Linien der Längssteg 11 und der Quersteg 13 dargestellt, während mit unterbrochenen Linien die dahinter liegenden Stege 12 und 14 gezeichnet sind. Die in den schraffierten Kanälen liegenden Teile dieser Stege sind in den Figuren 3 und 4 ebenfalls durch eine Schraffur gekennzeichnet.

Die Längsstege 11 und 12 verlaufen etwa zickzackförmig und tragen in ihren oberen und unteren Bereichen Schlitze 15, durch die die Querstege 13 und 14 gesteckt sind, die ebenfalls zickzackförmig verlaufen und in ihren oberen und unteren Bereichen Steckschlitze 16 tragen. Dadurch entstehen praktisch zwei Gruppen von Längsstegen und zwei Gruppen von Querstegen, wobei der Längssteg 11 der einen Längssteg-Gruppe angehört und alle anderen Längsstege dieser einen Gruppe in Figur 3 vom Längssteg 11 vollständig verdeckt sind, während der andere Längssteg 12 der anderen Gruppe angehört und alle Längsstege der anderen Gruppe verdeckt. Die beiden Längsstege, die dem Längssteg einer Gruppe benachbart sind, gehören dann jeweils der anderen Gruppe an. In der gleichen Weise gehören in Figur 4 die Querstege 13 und 14 zwei Quersteg-Gruppen an und ein Quersteg einer Gruppe ist zu zwei Querstegen der anderen Gruppe benachbart.

Die Längsstege durchsetzen dabei die Querstege an den durch die Schlitze 15, 16 bestimmten Schnittlinien innerhalb angegebener, zu den Brennstäben senkrechter Zonen A und C, durch die entsprechende, zu den Stäben senkrechte Querschnittsebenen I und II gelegt sind, die somit die axiale Lage der Kreuzungsstellen beschreiben. Zwischen diesen Zonen A und C bzw. den entsprechenden Kreuzungsebenen I und II erstrecken sich also die Längsund Querstege zickzackförmig:
Die dem Kühlmittelstrom K zugewandten Stirnkanten M, also die unteren Ränder der Stege 11, 12, 13, 14 der Figuren 3 und 4, verlaufen zwischen in der Ebene I', also stromaufwärts, gelegenen Extrempunkten und in der Ebene II', also stromabwärts gelegenen Extrempunkten; ebenso verlaufen die dem Kühlmittelstrom abgewandten Stirnkanten N dieser Stege zwischen Extrempunkten auf der stromaufwärts gelegenen Ebene I" und der stromabwärts gelegenen Ebenen II". Wie Figuren 3 und 4 zeigen, liegen dabei die stromabwärts gelegenen Extrempunkte (Ebene II') der dem Kühlmittelstrom zugewandten Sirnkante M weiter stromabwärts als die stromaufwärts gelegenen Extrempunkte (Ebene I") der dem Kühlmittelstrom abgewandten Stirnkante N.

Die in einer unteren Kreuzungsebene I liegenden (schraffierten oder "schwarzen") Strömungskanäle enthalten dann eine Gruppe von Kreuzungsstellen, die entweder von dem Längssteg 11 (oder einem anderen Längssteg dieser Gruppe) und dem Quersteg 13 (oder einem anderen Quersteg dieser Gruppe) oder aber von einem Längssteg und einem Quersteg der anderen Gruppe (z.B. Steg 12 und Steg 14) gebildet werden. Die anderen Kreuzungsstellen liegen in der oberen Kreuzungsebene II und werden jeweils entweder von einem Quersteg der einen Quersteggruppe und einem Längssteg der anderen Längssteggruppe (z.B. die Stege 12 und 13) oder einem Längssteg der einen Längssteggruppe und einem Quersteg der anderen Quersteggruppe (z.B. die Stege 11 und 14) gebildet.

Man erkennt, daß - in Richtung des Kühlmittelstromes K - in den "schwarzen" Strömungsunterkanälen zunächst in der Zone A der Strömungsquerschnitt durch die sich kreuzenden Stege zunehmend verengt wird und daher in einem Strömungsunterkanal, der die unteren Kreuzungsstellen enthält und mit L gekennzeichnet ist, in der Zone A eine zunehmende Kompression des Kühlmittelstroms stattfindet. In den ("schwarzen") Kanälen kreuzen sich die Stege in dieser Zone A; in den benachbarten ("weißen") Strömungsunterkanälen, die nur obere Kreuzungsstellen enthalten und mit H bezeichnet sind, ist in der Zone A noch der volle Strömungsquerschnitt verfügbar.

An die Zone A schließt sich eine Zone B an, in der der Gesamtströmungsquerschnitt beider Kanäle ungefähr gleich bleibt, wobei der Strömungsquerschnitt der weißen Kanäle ungefähr in dem Maße eingeengt ("kontrahiert") wird, in dem der Strömungsquerschnitt in den schwarzen Kanälen weder vergrößert ("expandiert") wird.

In der Ebene II' liegt eine maximale Kontraktion des Strömungsquerschnittes für die weißen Kanäle vor. In der Zone C schneiden sich die Stege in den weißen Kanälen, während in den schwarzen Kanälen Expansion vorliegt oder sogar der volle, ungestörte Strömungsquerschnitt wieder zur Verfügung steht.

Jedenfalls nimmt der gesamte Strömungsquerschnitt trotz der Schnittstelle der beiden Gitterstege in der Zone C zu.

In Richtung des Kühlmittelstromes K findet also zunächst nur in einem Teil der Strömungsunterkanäle eine Kontraktion (und gegebenenfalls bereits Expansion) statt, während der andere Teil der Kanäle noch keine Kontraktion/ Expansion zeigt. In Richtung der axialen Strömung K schließt sich daran der gleiche Vorgang mit vertauschten Rollen an: In dem Teil der Kanäle, dessen Strömungsquerschnitt bisher nicht durch kreuzende Stege verengt war, tritt jetzt Kontraktion/Expansion auf, während in dem anderen Teil der Kanäle, in dem bereits Kontraktion/ Expansion aufgetreten ist, jetzt keine weitere Kontraktion/Expansion auftritt.

Dadurch entsteht insgesamt ein wesentlich geringerer Strömungswiderstand, wobei es auch bereits zu einer gewissen Vermischung der Strömungen in den Unterkanälen kommt.

Wird die durch die Figuren 3 und 4 beschriebene Gitterstruktur als Abstandhalter verwendet, so sind an den Stegen Federn und Noppen oder andere, nicht dargestellte Abstandhaltemittel befestigt, durch die die Stäbe in den Maschen des Gitters gehalten werden. Nach dem gleichen Prinzip können auch die Abstandhaltemittel auf mehrere axiale Ebenen verteilt werden, um die Querschnittsverengung, die z.B. Federn und Noppen hervorrufen, möglichst zu entflechten und nicht auf eine Ebene zu konzentrieren.

Figur 5 zeigt eine Draufsicht auf einen derart aus Längsstegen und Querstegen aufgebauten Abstandhalter mit Federn 18 und Noppen 19.

Die Gitterstruktur der Figuren 3 und 4 kann aber auch als Träger für Mischflügel verwendet werden, um durch entsprechenden Drall in der Strömung einen axialen und radialen Temperaturausgleich zu ermöglichen. Als Ort für diese Mischflügel bieten sich insbesondere die Zonen B und D (Ebenen I" und II") an, da dort jeweils in der einen Gruppe von Kreuzungsstellen die Kontraktion bereits abgeschlossen ist und der Strömungsquerschnitt bereits wieder expandiert, während in den benachbarten Strömungskanälen praktisch noch der volle Strömungsquerschnitt zur Verfügung steht. Anschließend können sich Turbulenzen und Wirbel in dem expandierten Kühlmittelstrom ausbilden, ohne zu einem hohen Druckverlust zu führen.

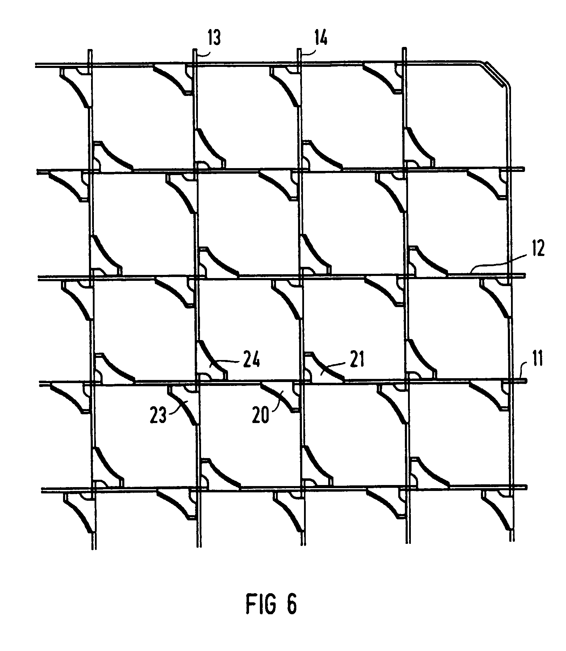

In Figur 6 wird in einer Draufsicht von oben auf die obere, dem Kühlmittelstrom abgewandte Seite einer derartigen Struktur erkennbar, daß zumindest mehrere der Kreuzungsstellen an der dem Kühlmittelstrom abgewandten Kante der Stege jeweils wenigstens einen seitlich gegenüber der Seitenfläche der Stege geneigten Mischflügel tragen. Bei der dargestellten Struktur tragen jeweils zwei benachbarte Kreuzungsstellen ein Paar von Mischflügeln, wobei die Mischflügel (z.B. 20, 21) in der ersten der beiden Kreuzungsstellen (z.B. der Kreuzung der Stege 12 und 14) an der Kante eines ersten Steges (12) angeordnet sind, während die Mischflügel (z.b. 22, 23) in der zweiten der beiden Kreuzungsstellen an der Kante des den ersten Steg (12) kreuzenden Steges 13 angeordnet sind. Es ist auch möglich, in jeder Kreuzungsstelle vier derartige Mischflügel vorzusehen.

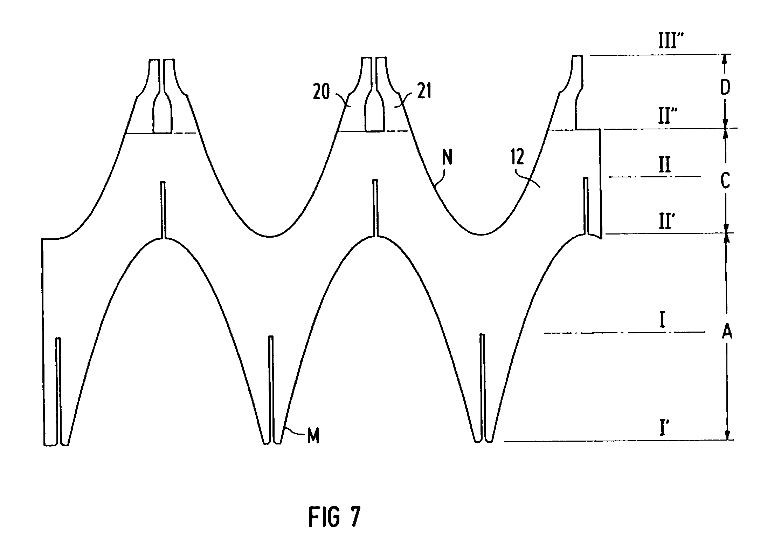

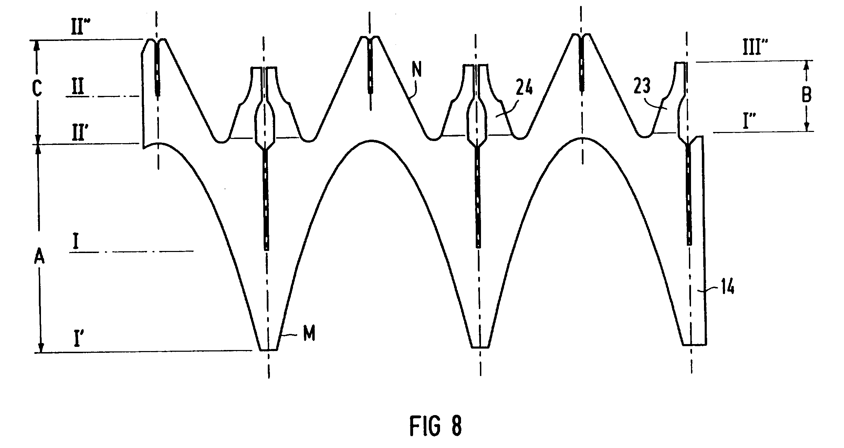

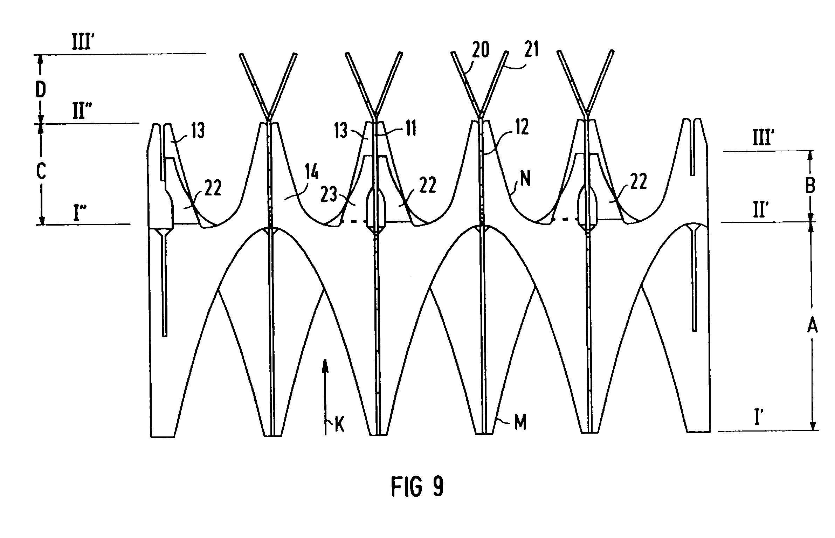

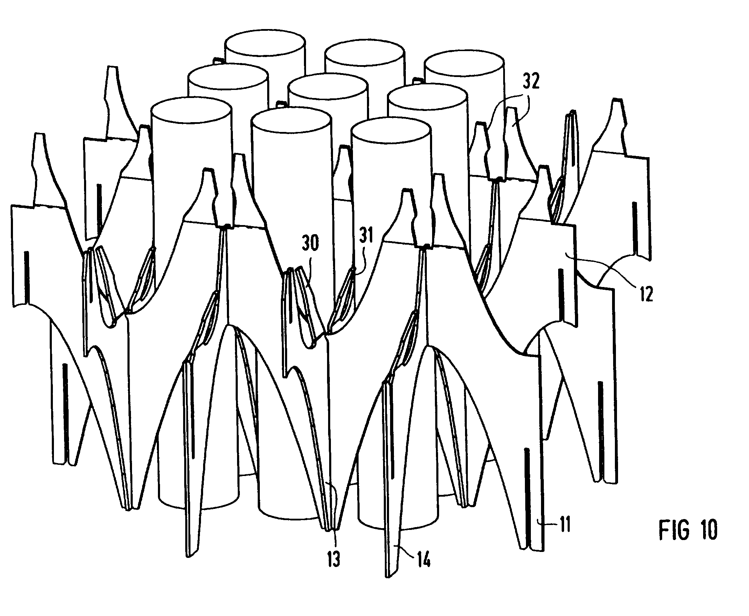

In Figur 7 ist eine Seitenansicht des Längssteges 11 dargestellt, Figur 8 die Seitenansicht des Querstegs 13. Figur 9 zeigt eine Seitenansicht (ohne Brennstäbe) und Figur 10 eine perspektivische Seitenansicht (mit Brennstäben) durch einen Teil des entsprechend den Figuren 6 bis 8 aufgebauten Mischgitters.

Auch hier verläuft die dem Kühlmittelstrom zugewandte (untere) Stirnkante M der Stege zickzackförmig zwischen den Ebenen I' und II', auf denen ihre Extrempunkte liegen, während die Extrempunkte der dem Kühlmittelstrom abgewandten (oberen) Stirnkante N auf den Ebenen I" und II" liegen. Dabei kommt bei dieser Ausfüahrungsform die Ebene II' praktisch genauso weit stromabwärts zu liegen wie die Ebene I". Zwischen diesen Stirnkanten M und N erstrecken sich die Seitenflächen der Stege 11 bis 14, die sich in den um die Mittelebenen I und II herum liegenden beiden Zonen A und C kreuzen.

Die Längsstege sind zueinander parallel, jedoch bilden sie zwei Gruppen, die gegeneinander jeweils um eine Maschenbreite versetzt sind, wie der Längssteg 11 der einen Gruppe und der Längssteg 12 der zweiten Gruppe zeigt. Eine entsprechende Struktur gilt auch für die Querstege. Man erkennt nun, daß jeweils die Längsstege die Mischflügel 20, 21 tragen, die an den oberen Kreuzungen, d.h. in der Ebene II" angeordnet sind, während die an der Kante der Querstege 13 angeordneten Mischflügel 20, 23 an den unteren Kreuzungen, also in der Ebene I" angeordnet sind.

Figur 10 zeigt eine in perspektivischer Darstellung zusammen mit den in den Maschen sitzenden Stäben. Bei Druckwasserreaktoren sind einige der Stäbe als Führungsrohre für Absorberelemente oder Instrumentierungsrohre zur Führung von Meßlanzen oder anderen Instrumenten ausgebildet. Sofern es die Größe dieser Führungsrohre zuläßt, sind vorzugsweise auch an den diese Stäbe abstützenden Stegen Mischflügel vorgesehen.

In Figur 8 ist daher davon ausgegangen, daß alle erkennbaren Strömungskanäle Mischflügel (30, 31, 32) tragen. Diese Mischflügel sitzen an Kanten von Stegen, deren Seitenflächen 33, 34 praktisch parallel zu den Stäben ausgerichtet sind und die quer zu den Stäben im Zwischenraum zwischen den Stäben verlaufen. Dabei gehören die Mischflügel 30, 31 zu einer Gruppe von Kreuzungsstellen, die in der unteren Kreuzungsebene liegen, während der Mischflügel 32 zu einer anderen, in der oberen Kreuzungsebene liegenden Gruppe gehört.

Die Zahl der Mischflügel hängt von den angestrebten Strömungsverhältnissen ab. So kann unter Umständen ein einziger Mischflügel in jedem Strömungskanal ausreichen. Vorteilhaft ist aber jeweils einer mindestens einen Mischflügel tragenden Kreuzungsstelle einer Gruppe jeweils eine Kreuzungsstelle der anderen Gruppe benachbart, die ebenfalls mindestens einen Mischflügel trägt.

Häufig werden für jede Kreuzungsstelle zwischen Brennstäben mindestens zwei in entgegengesetzten Richtungen gegenüber der Seitenfläche der Stege geneigte Mischflügel für erforderlich gehalten. Bei der erfindungsgemäßen Gitterstruktur liegen diese beiden Mischflügel bevorzugt in der gleichen Kreuzungsebene. Die Kante eines Steges, die einen entsprechenden, geneigten Mischflügel trägt, trägt dann also auch einen zweiten, in entgegengesetzter Richtung geneigten Flügel.

Bei dem Schachbrettmuster nach Figur 2 kommt dabei neben einer ersten Kreuzungsstelle, in der ein erster Steg die beiden Mischflügel trägt, eine zweite Kreuzungsstelle zu liegen, die ebenfalls zwei Mischflügel trägt, wobei diese Mischflügel der benachbarten, zweiten Kreuzungsstelle an der dem Kühlmittelstrom abgewandten Kante eines zweiten, den ersten Steg kreuzenden Steges angeordnet sind und gegenüber den Seitenflächen des zweiten Stegel in zueinander entgegengesetzten Richtungen geneigt sind.

In den Figuren 6 bis 10 sind Abstandhalteelemente nicht dargestellt, die immer dann vorgesehen sind, wenn ein derartiges Mischgitter mit seinen Mischflügeln gleichzeitig als Abstandhalter für die Brennstäbe verwendet wird.

## Patentansprüche

1. Gitterstruktur für ein langgestrecktes Brennelement mit nebeneinander und parallel zueinander angeordneten Stäben, deren Zwischenräume Strömungskanäle für einen zu den Stäben ungefähr parallelen Kühlmittelstrom (K) bilden, wobei
a) die Stäbe durch die Maschen eines Gitters geführt werden können, dessen Seitenflächen (11,12,13,14) mit einer dem Kühlmittelstrom zugewandten Stirnkante (M) und einer dem Kühlmittelstrom abgewandten Stirnkante (N) zwischen den Stäben verlaufen,
b) die Stirnkanten (M,N) einen zickzackförmigen Verlauf zwischen stromaufwärts und stromabwärts gelegenen Extrempunkten (I',II',I",II") mit einer Halbperiode des zickzackförmigen Verlaufs zeigen, der etwa dem Abstand (H, L) zwischen den Mittelachsen benachbarter Strömungskanäle entspricht, und
c) mindestens ein Teil der stromabwärts gelegenen Extrempunkte (II') der dem Kühlmittelstrom (K) zugewandten Stirnkante (M) etwa genauso weit oder weiter stromabwärts liegen als mindestens ein Teil der stromaufwärts liegenden Extrempunkte (I") der dem Kühlmittelstrom abgewandten Stirnkante (N).

2. Gitterstruktur nach Anspruch 1,
**dadurch gekennzeichnet**, daß die genauso weit oder weiter stromabwärts liegenden Extrempunkte (II') der dem Kühlmittelstrom zugewandten Stirnkante (M) gegenüber den stromaufwärts liegenden Extrempunkten (I") der dem Kühlmittelstrom abgewandten Stirnkante (N) seitlich etwa um den Abstand (H, L) zwischen den Mittelachsen benachbarter Strömungskanäle versetzt sind.

3. Gitterstruktur für ein langgestrecktes Brennelement mit nebeneinander und zueinander parallel angeordneten Stäben (8, 10) zwischen denen ein Kühlmittelstrom längs durch das Brennelement geleitet ist, mit folgenden Merkmalen:
a) Die Stäbe (8, 10) können durch die Maschen eines Gitters geführt werden, und
b) das Gitter wird von Stegen (11, 12, 13, 14) gebildet, die sich zickzackförmig zwischen einer oberen Kreuzungsebene (II) und einer unteren Kreuzungsebene (I) erstrecken, deren Seitenflächen zwischen den Stäben verlaufen und die sich an zwischen den Stäben liegenden Kreuzungsstellen gegenseitig durchsetzen, wobei
c) eine erste Gruppe von Kreuzungsstellen in der oberen Kreuzungsebene (II), eine zweite Gruppe von Kreuzungsstellen in der unteren Kreuzungsebene (I) liegen, und wobei jeweils bei zwei im Gitter nebeneinander liegenden Kreuzungsstellen die eine Kreuzungsstelle der einen Gruppe, die andere Kreuzungsstelle der anderen Gruppe angehört.

4. Gitterstruktur nach Anspruch 3,
**dadurch gekennzeichnet**, daß zumindest mehrere der Kreuzungsstellen an einer dem Kühlmittelstrom abgewandten Kante (N) der Stege jeweils wenigstens einen gegenüber der Seitenfläche der Stege geneigten Mischflügel (20, 21; 22, 23) tragen.

5. Gitterstruktur nach Anspruch 4,
**dadurch gekennzeichnet**, daß jeweils zwei benachbarte Kreuzungsstellen jeweils mindestens ein Paar (20, 21; 22, 23) von Mischflügeln tragen, wobei die Mischflügel (20, 21) in der ersten der beiden Kreuzungsstellen an der Kante eines ersten Steges (12) und die Mischflügel (22, 23) in der zweiten der beiden Kreuzungsstellen an der Kante eines den ersten Steg kreuzenden Steges (13) angeordnet sind.

6. Gitterstruktur nach einem der Ansprüche 3 bis 5,
**dadurch gekennzeichnet**, daß das Gitter mindestens zwei Gruppen von Längsstegen (11, 12) und zwei Gruppen von Querstegen (13, 14) enthält, wobei in der ersten Gruppe von Kreuzungsstellen sich jeweils ein Längssteg (11) der ersten Längssteg-Gruppe und ein Quersteg (13) der ersten Quersteg-Gruppe oder ein Längssteg (12) der zweiten Längssteg-Gruppe und ein Quersteg (14) der zweiten Quersteg- Gruppe kreuzen, und in der zweiten Gruppe von Kreuzungsstellen sich jeweils ein Längssteg (11) der ersten Längssteg-Gruppe und ein Quersteg (14) der zweiten Quersteg-Gruppe oder ein Längssteg (12) der zweiten Längssteg-Gruppe und ein Quersteg (13) der ersten Quersteg-Gruppe kreuzen.

7. Gitterstruktur nach Anspruch 6,
**dadurch gekennzeichnet**, daß dem Kühlmittelstrom abgewandte Kanten (N) der Längsstege (11, 12) Mischflügel tragen, die in der einen Kreuzungsgruppe angeordnet sind, und dem Kühlmittelstrom abgewandte Kanten (N) der Querstege (13, 14) Mischflügel tragen, die in der anderen Kreuzungsebene angeordnet sind.

8. Gitterstruktur für ein langgestrecktes Brennelement mit nebeneinander und parallel zueinander angeordneten Stäben, zwischen denen ein Kühlmittelstrom längs durch das Brennelement geleitet wird, mit folgenden Merkmalen:
a) Die Stäbe können durch Maschen eines Gitters geführt werden;
b) an Kreuzungsstellen des Gitters, die zwischen den Stäben (8, 10) liegen, sind seitlich in den Kühlmittelstrom (K) ragende Mischflügel (20, 21, 22, 23) jeweils an der dem Kühlmittel strom abgewandten Kante (N) von Stegen angeordnet, deren Seitenflächen ungefähr parallel zum Kühlmittelstrom ausgerichtet sind und die quer zum Kühlmittelstrom im Zwischenraum zwischen den Stäben verlaufen, wobei
c) jeweils eine Kreuzungsstelle einer ersten Gruppe von Kreuzungsstellen mindestens einen in einer stromabwärts gelegenen Kreuzungsebene (II") angeordneten Mischflügel (20, 21) und jeweils eine Kreuzungsstelle einer zweiten Gruppe von Kreuzungsstellen mindestens einen in einer stromaufwärts gelegenen Kreuzungsebene (I") angeordneten Mischflügel (22, 23) aufweist,
**dadurch gekennzeichnet**, daß die Stege sich gegenseitig durchsetzen.

9. Gitterstruktur nach Anspruch 8,
**dadurch gekennzeichnet**, daß jeweils einer mindestens einen Mischflügel (20, 21) tragenden Kreuzungsstelle einer Gruppe eine Kreuzungsstelle einer anderen Gruppe benachbart ist, die ebenfalls mindestens einen Mischflügel (22, 23) trägt.

10. Gitterstruktur nach Anspruch 8 oder 9,
**dadurch gekennzeichnet**, daß jede Kreuzungsstelle mindestens zwei in der gleichen Kreuzungsebene liegende, in unterschiedliche Richtungen gegenüber der Längsachse der Stäbe geneigte Mischflügel (20, 21) trägt.

11. Gitterstruktur nach Anspruch 10,
**dadurch gekennzeichnet**, daß die Kante des Steges (12), die den ersten, geneigten Mischflügel (20) in einer Kreuzungsstelle trägt, in dieser Kreuzungsstelle auch einen zweiten, in entgegengesetzter Richtung geneigten Mischflügel (21) trägt.

12. Gitterstruktur nach Anspruch 8,
**dadurch gekennzeichnet**, daß neben einer ersten Kreuzungsstelle, bei der ein erster Steg (13) mindestens einen Mischflügel (22, 23) trägt, eine in Richtung des ersten Steges benachbarte zweite Kreuzungsstelle mindestens einen Mischflügel (20, 21) trägt, der an der dem Kühlmittelstrom abgewandten Kante eines zweiten, den ersten Steg kreuzenden Steges (12) angeordnet ist und gegenüber der Seitenfläche des zweiten Stegs geneigt ist.

13. Gitterstruktur nach einem der Ansprüche 8 bis 12,
**dadurch gekennzeichnet**, daß die Stege (11, 12, 13, 14) jeweils zickzackförmig zwischen beiden Kreuzungsebenen verlaufen.

14. Gitterstruktur nach einem der Ansprüche 1 bis 13,
**gekennzeichnet durch** Abstandhalteelemente an den Stegen, die die seitliche Lage der Stäbe in den Maschen des Gitters festlegen.

15. Brennelement für einen Kernreaktor mit einem Abstandhalter, der eine Gitterstruktur nach einem der Ansprüche 1 bis 7 und Abstandhalteelemente enthält, die die seitliche Lage der Stäbe in den Maschen des Gitters festlegen.

16. Brennelement für einen Kernreaktor mit einem Mischgitter, das eine Gitterstruktur nach einem der Ansprüche 8 bis 13 enthält.

## Claims

1. Grid structure for an elongate fuel element with rods arranged parallel next to one another, the interspaces of which form flow channels for a stream of coolant (K) approximately parallel to the rods, in which arrangement
a) the rods can be guided by the meshes of a grid, the side surfaces (11, 12, 13, 14) of which run between the rods with one end edge (M) facing the stream of coolant and one end edge (N) facing away from the stream of coolant,
b) the end edges (M, N) exhibit a zigzag-shaped progression between upstream and downstream extreme points (I', II', I", II") with a half-period of the zigzag-shaped progression, which corresponds approximately to the distance (H, L) between the centre axes of neighbouring flow channels, and
c) at least some of the downstream extreme points (II') of the end edge (M) facing the stream of coolant (K) lie just as far as or further downstream than at least some of the upstream extreme points (I") of the end edge (N) facing away from the stream of coolant.

2. Grid structure according to Claim 1, characterized in that the extreme points (II'), lying just as far or further downstream, of the end edge (M) facing the stream of coolant are laterally offset approximately by the distance (H, L) between the centre axes of neighbouring flow channels with respect to the upstream extreme points (I") of the end edge (N) facing away from the stream of coolant.

3. Grid structure for an elongate fuel element with rods (8, 10) arranged parallel next to one another, between which a stream of coolant is conducted longitudinally through the fuel element, having the following features:
a) the rods (8, 10) can be guided by the meshes of a grid, and
b) the grid is formed by webs (11, 12, 13, 14) which extend in zigzag form between an upper crossing plane (II) and a lower crossing plane (I), the side surfaces of which run between the rods and pass through one another at crossing points lying between the rods, in which arrangement
c) a first group of crossing points lies in the upper crossing plane (II), a second group of crossing points lies in the lower crossing plane (I), and in which arrangement, with two crossing points lying next to each other in the grid, in each case the one crossing point belongs to the one group, the other crossing point belongs to the other group.

4. Grid structure according to Claim 3, characterized in that at least some of the crossing points bear on an edge (N) of the webs facing away from the stream of coolant in each case at least one mixing vane (20, 21; 22, 23) inclined with respect to the side surface of the webs.

5. Grid structure according to Claim 4, characterized in that in each case two neighbouring crossing points respectively bear at least one pair (20, 21; 22, 23) of mixing vanes, the mixing vanes (20, 21) at the first of the two crossing points being arranged on the edge of a first web (12) and the mixing vanes (22, 23) at the second of the two crossing points being arranged on the edge of a web (13) crossing the first web.

6. Grid structure according to one of Claims 3 to 5, characterized in that the grid contains at least two groups of longitudinal webs (11, 12) and two groups of transverse webs (13, 14), there crossing in the first group of crossing points in each case a longitudinal web (11) of the first longitudinal web group and a transverse web (13) of the first transverse web group or a longitudinal web (12) of the second longitudinal web group and a transverse web (14) of the second transverse web group, and there crossing in the second group of crossing points in each case a longitudinal web (11) of the first longitudinal web group and a transverse web (14) of the second transverse web group or a longitudinal web (12) of the second longitudinal web group and a transverse web (13) of the first transverse web group.

7. Grid structure according to Claim 6, characterized in that edges (N) of the longitudinal webs (11, 12) facing away from the stream of coolant bear mixing vanes which are arranged in the one crossing group, and edges (N) of the transverse webs (13, 14) facing away from the stream of coolant bear mixing vanes which are arranged in the other crossing plane.

8. Grid structure for an elongate fuel element with rods arranged parallel next to one another, between which a stream of coolant is conducted longitudinally through the fuel element, having the following features:
a) the rods can be guided by meshes of a grid,
b) at crossing points of the grid which lie between the rods (8, 10) there are arranged, protruding laterally into the stream of coolant (K), mixing vanes (20, 21, 22, 23) in each case on the edge (N) of webs facing away from the stream of coolant, the side surfaces of which edges are aligned approximately parallel to the stream of coolant and which run transversely to the stream of coolant in the interspace between the rods, in which arrangement
c) in each case a crossing point of a first group of crossing points has at least one mixing vane (20, 21) arranged in a downstream crossing plane (II") and in each case a crossing point of a second group of crossing points has at least one mixing vane (22, 23) arranged in an upstream crossing plane (I"), characterized in that the webs pass through one another.

9. Grid structure as claimed in Claim 8, characterized in that in each case a crossing point of a group bearing at least one mixing vane (20, 21) is neighboured by a crossing point of another group, which likewise bears at least one mixing vane (22, 23).

10. Grid structure as claimed in Claim 8 or 9, characterized in that each crossing point bears at least two mixing vanes (20, 21) lying in the same crossing plane and inclined in different directions with respect to the longitudinal axis of the rods.

11. Grid structure according to Claim 10, characterized in that the edge of the web (12) which bears the first, inclined mixing vane (20) at a crossing point also bears at this crossing point a second mixing vane (21), inclined in the opposite direction.

12. Grid structure according to Claim 8, characterized in that next to a first crossing point, at which a first web (13) bears at least one mixing vane (22, 23), a second crossing point neighbouring the first in the direction of the first web bears at least one mixing vane (20, 21), which is arranged on the edge facing away from the stream of coolant of a second web (12), crossing the first web, and is inclined with respect to the side surface of the second web.

13. Grid structure according to one of Claims 8 to 12, characterized in that the webs (11, 12, 13, 14) in each case run in zigzag form between two crossing planes.

14. Grid structure according to one of Claims 1 to 13, characterized by spacing elements at the webs, which fix the lateral position of the rods in the meshes of the grid.

15. Fuel element for a nuclear reactor with a spacer which contains a grid structure according to one of Claims 1 to 7 and spacing elements which fix the lateral position of the rods in the meshes of the grid.

16. Fuel element for a nuclear reactor with a mixing grid which contains a grid structure according to one of Claims 8 to 13.

## Revendications

1. Structure réticulaire pour un assemblage combustible oblong ayant des crayons disposés les uns à côté des autres et parallèlement les uns aux autres, dont les intervalles entre eux forment des canaux d'écoulement d'un courant (K) de fluide de refroidissement à peu près parallèle aux crayons, dans laquelle
a) les crayons peuvent être passés dans les mailles d'une grille dont les faces latérales (11, 12, 14) s'étendent entre les crayons en ayant un bord frontal (M) tourné vers le courant de fluide de refroidissement et un bord frontal (N) éloigné du courant de fluide refroidissement,
b) les bords frontaux (M, N) présentent un tracé en zig-zag entre des points extrêmes (I', II', I", II") en amont et en aval avec une demi-période du tracé en zig-zag qui correspond à peu près à la distance (H, L) entre les axes médians de canaux d'écoulement voisins, et
c) au moins une partie des points extrêmes (Il'), se trouvant en aval, du bord frontal (M) tourné vers le courant (K) de fluide de refroidissement se trouve à peu près juste aussi loin ou plus loin en aval qu'au moins une partie des points extrêmes (I'), se trouvant en amont, du bord frontal (N) éloigné du courant de fluide de refroidissement.

2. Structure réticulaire suivant la revendication 1,
caractérisée en ce que les points extrêmes (II'), se trouvant juste aussi loin ou plus loin en aval, du bord frontal (M) tourné vers le courant de fluide de refroidissement sont décalés latéralement par rapport aux points extrêmes (I") se trouvant en amont du bord frontal (N) éloigné du courant d'agent de refroidissement à peu près de la distance (H, L) entre les axes médians de canaux d'écoulement voisins.

3. Structure réticulaire pour un assemblage combustible oblong ayant des crayons (8, 10) disposés les uns à côté des autres et parallèlement les uns aux autres et entre lesquels un courant de fluide de refroidissement passe le long de l'assemblage combustible ayant les caractéristiques suivantes :
a) les crayons (8, 10) peuvent passer dans les mailles d'une grille, et
b) la grille est formée de réglettes (11, 12, 13, 14) qui s'étendent en zig-zag entre un plan supérieur (II) d'intersection et un plan inférieur (I) d'intersection dont les faces frontales s'étendent entre les crayons et qui se croisent mutuellement en des points d'intersection se trouvant entre les crayons,
c) un premier groupe de points d'intersection se trouvant dans le plan supérieur (II) d'intersection, un second groupe de points d'intersection se trouvant dans le plan inférieur (I) d'intersection et pour deux points d'intersection se trouvant côte à côte dans la grille, l'un des points d'intersection appartient à l'un des groupes et l'autre point d'intersection appartient à l'autre groupe.

4. Structure réticulaire suivant la revendication 3,
caractérisée en ce qu'au moins plusieurs des points d'intersection portent sur l'un des bords (N) de la réglette, qui est éloigné du courant de fluide de refroidissement, au moins une ailette de mélange (20, 21, 22, 23) inclinée par rapport à la surface latérale de la réglette.

5. Structure réticulaire suivant la revendication 4,
caractérisée en ce que deux points d'intersection voisins portent chacun au moins une paire (20, 21, 22, 23) d'ailettes de mélange, les ailettes de mélange (20, 21) des premiers des deux points d'intersection se trouvant au bord d'une première réglette (12) et les ailettes de mélange (22, 23) des seconds des deux points d'intersection se trouvant au bord d'une réglette (13) croisant la première réglette.

6. Structure réticulaire suivant l'une des revendications 3 à 5,
caractérisée en ce que la grille comporte au moins deux groupes de réglettes (11, 12) longitudinales et deux groupes de réglettes (13, 14) transversales, une réglette longitudinale (11) du premier groupe de réglettes longitudinales et une réglette transversale (13) du premier groupe de réglettes transversales ou une réglette longitudinale (12) du second groupe de réglettes longitudinales et une réglette transversale (14) du second groupe de réglettes transversales se croisant dans le premier groupe des points de croisement et une réglette longitudinale (11) du premier groupe de réglettes longitudinales et une réglette transversale (14) du second groupe de réglettes transversales ou une réglette longitudinale (12) du second groupe de réglettes longitudinales et une réglette transversale (13) du premier groupe de réglettes transversales se croisant dans le second groupe de points d'intersection.

7. Structure réticulaire suivant la revendication 6,
caractérisée en ce que des bords (N) des réglettes longitudinales (11, 12), qui sont éloignés du courant de fluide de refroidissement, portent des ailettes de mélange qui sont disposées dans l'un des plans d'intersection et des bords (N) des réglettes transversales (13, 14), qui sont éloignés du courant de fluide de refroidissement, sont disposés dans l'autre plan d'intersection.

8. Structure réticulaire pour un assemblage combustible oblong ayant des crayons disposés les uns à côté des autres et parallèlement les uns aux autres, entre lesquels un courant de fluide de refroidissement passe le long de l'assemblage combustible ayant les caractéristiques suivantes :
a) les crayons peuvent passer dans les mailles d'une grille,
b) aux points d'intersection de la grille qui se trouvent entre les crayons (8, 10), il est prévu des ailettes de mélange (20, 21, 22, 23) faisant saillie latéralement dans le courant (K) de fluide de refroidissement sur le bord (N), éloigné du courant de fluide de refroidissement, de réglettes dont les faces latérales sont à peu près parallèles au courant de fluide de refroidissement et qui s'étendent transversalement au courant de fluide de refroidissement dans l'espace intermédiaire compris entre les crayons,
c) un point d'intersection d'un premier groupe de points d'intersection comporte au moins une ailette de mélange (20, 21) disposée dans un plan d'intersection (II") en aval et un point d'intersection d'un deuxième groupe de points d'intersection comporte au moins une ailette de mélange (22, 23) disposée dans un plan d'intersection (I") en amont,
caractérisée en ce que les réglettes se croisent mutuellement.

9. Structure réticulaire suivant la revendication 8,
caractérisée en ce qu'au moins un point d'intersection, portant au moins une ailette de mélange (20, 21), d'un groupe est voisin d'un point d'intersection d'un autre groupe qui porte également au moins une ailette de mélange (22, 23).

10. Structure réticulaire suivant la revendication 8 ou 9,
caractérisée en ce que chaque point d'intersection porte au moins deux ailettes de mélange (20, 21) se trouvant dans le même plan d'intersection et inclinées dans des directions différentes par rapport à l'axe longitudinal des crayons.

11. Structure réticulaire suivant la revendication 10,
caractérisée en ce que les bords des réglettes (12), qui portent en un point d'intersection la première ailette de mélange (20) inclinée, portent également à ce point d'intersection une deuxième ailette de mélange (21) inclinée en sens opposé.

12. Structure réticulaire suivant la revendication 8,
caractérisée en ce qu'à côté d'un premier point d'intersection, où une première réglette (13) porte au moins une ailette de mélange (22, 23), un deuxième point d'intersection voisin dans la direction de la première réglette porte au moins une ailette de mélange (20, 21), qui est prévue sur le bord, éloigné du courant de fluide de refroidissement, d'une deuxième réglette (12) croisant la première et qui est inclinée par rapport à la face latérale de la deuxième réglette.

13. Structure réticulaire suivant l'une des revendications 8 à 12,
caractérisée en ce que les réglettes (11, 12, 13, 14) s'étendent en zig-zag entre les deux plans d'intersection.

14. Structure réticulaire suivant l'une des revendications 1 à 13,
caractérisée par des éléments d'entretoisement sur les réglettes qui fixent la position latérale des crayons dans les mailles de la grille.

15. Assemblage combustible pour un réacteur nucléaire ayant une entretoise qui comporte une structure réticulaire suivant l'une des revendications 1 à 7, et des éléments d'entretoisement qui fixent la position latérale des crayons dans les mailles de la grille.

16. Assemblage combustible pour un réacteur nucléaire ayant une grille de mélange qui a une structure réticulaire suivant l'une des revendications 8 à 13.
